# EUROPEAN PATENT SPECIFICATION

(11) **EP 2 599 692 B1**
(45) Date of publication and mention of the grant of the patent: **08.01.2014**
(21) Application number: 13155861.1
(22) Date of filing: 01.08.2011
(51) Int. Cl.: B62D 25/08

(54) **Vehicle body rear part structure**
Hinterteilkonstruktion einer Fahrzeugkarosserie
Structure de carrosserie arrière d'un véhicule

(30) Priority: 03.08.2010 JP 2010174195; 03.08.2010 JP 2010174196; 03.08.2010 JP 2010174197
(43) Date of publication of application: 05.06.2013
(62) Divisional of application: 11176199.5
(73) Proprietor: Honda Motor Co., Ltd., Tokyo 107-8556 (JP)
(72) Inventor: Kitagawa, Akihiro, Saitama, 351-0193 (JP)
(74) Representative: Prechtel, Jörg

(56) References cited:
- JP-A- 2000 043 754
- JP-A- 2009 120 078

## Description

### BACKGROUND OF THE INVENTION

### FIELD OF THE INVENTION

The present invention relates to a vehicle body rear part structure in which left and right rear frames are disposed to extend in a front-rear direction along lateral sides of a vehicle body, respectively, and rear ends of the left and right rear frames are connected by a rear end panel standing substantially in a vertical direction and extending in a left-right direction of the vehicle body.

### DESCRIPTION OF THE RELATED ART

Japanese Patent Application Laid-open No. 2008-6865 has made publicly known a structure for increasing the surface stiffness of a cab back panel forming a rear wall of a cab of a truck to thereby suppress vibrations generated by the cab back panel. In the structure, a center portion, in the vehicle width direction, of a base part of the cab back panel is arched toward the rear side of the vehicle body; multiple first beads projecting rearward and extending in the up-down direction are formed in first regions located respectively at the opposite end sides, in the vehicle width direction, of the base part; and multiple second beads projecting rearward and extending in the up-down direction are formed in a second region located at the center, in the vehicle width direction, of the base part.

Meanwhile, in five-door vehicles, a rear end panel forming a rear wall below an opening portion of a trunk at a rear part is coupled at its left and right ends to the rear ends of left and right rear frames, respectively. Thus, in a case where the rear frames undergo deflection as a result of driving on a rough road surface or making a quick turn, the rear end panel receives bending loads from the rear frames.

The rear end panel includes multiple longitudinal edge lines for increasing the surface stiffness thereof. However, when the rear end panel receives the bending loads from the rear frames, the lower end of each longitudinal edge line may act as a point where bending starts, deteriorating the stiffness. Thus, in conventional practices, patches are laid on the lower ends of the longitudinal edge lines to reinforce them. However, since reinforcing with the patches increases the number of components and the man-hours for assembly, it is desirable to increase the stiffness of the rear end panel without using the patches.

Another example of the prior art is shown in Japanese Patent. JP 20000 43754.

### SUMMARY OF THE INVENTION

The present invention has been made in view of the foregoing circumstances, and an object thereof is to increase the stiffness of a rear end panel having multiple longitudinal edge lines without using patches.

In order to achieve the above object, according to a first feature of the present invention, there is provided a vehicle body rear part structure in which left and right rear frames are disposed to extend in a front-rear direction along lateral sides of a vehicle body, respectively, and rear ends of the left and right rear frames are connected by a rear end panel standing substantially in a vertical direction and extending in a left-right direction of the vehicle body, **characterized in that** the rear end panel is bent in the front-rear direction by being bent at at least two longitudinal edge lines extending in an up-down direction, and includes an inclined surface defined between two lateral edge lines extending in the left-right direction one of said two lateral lines connecting lower portions of the two longitudinal edge lines; and the inclined surface comprising a first position which is inclined from the vertical direction in the front-rear direction.

According to the above configuration, the rear ends of the left and right rear frames disposed to extend in the front-rear direction along the lateral sides of the vehicle body are connected by the rear end panel standing substantially in the vertical direction and extending in the left-right direction of the vehicle body. The rear end panel is bent in the front-rear direction by being bent at at least the two longitudinal edge lines extending in the up-down direction, so that the surface stiffness of the rear end panel is increased. The rear end panel includes the inclined surface defined between the two lateral edge lines extending in the left-right direction in such a manner as to connect the lower portions of the two longitudinal edge lines, and the inclined surface is inclined from the vertical direction in the front-rear direction. Thus, when bending loads are applied to the rear end panel in response to deflection of the left and right rear frames, the inclined surface can prevent deterioration in the stiffness of the rear end panel attributable to the lower portions of the longitudinal edge lines acting as points where bending starts. This makes it possible to improve the stiffness of the rear end panel without using reinforcement members such as patches.

According to a second feature of the present invention, in addition to the first feature, there is provided the vehicle body rear part structure, wherein a rear end panel stiffener is joined along an upper edge of the rear end panel.

According to the above configuration, the rear end panel stiffener is joined along the upper edge of the rear end panel. Thus, an upper portion of the rear end panel is reinforced by the rear end panel stiffener, and a lower portion of the rear end panel is reinforced by the inclined surface. Accordingly, the stiffness of the whole rear end panel can be increased.

According to a third feature of the present invention, in addition to the first or second feature, there is provided the vehicle body rear part structure, wherein the left and right rear frames and a lower edge of the rear end panel are connected by a floor panel to form a trunk; and of the two lateral edge lines, the upper lateral edge line is located rearward of the lower lateral edge line.

According to the above configuration, the trunk is formed by connecting the left and right rear frames and the lower edge of the rear end panel by the floor panel; and of the upper and lower lateral edge lines, the upper lateral edge line is located rearward of the lower lateral edge line. Thus, an upper portion of the rear end panel bulges rearward farther than a lower portion thereof. Accordingly, the volume of the trunk can be increased.

According to a fourth feature of the present invention, in addition to the third feature, there is provided the vehicle body rear part structure, wherein the inclined surface is formed in an L-shape with a second portion thereof on an outer side of the vehicle body extending upward.

According to the above configuration, the inclined surface is formed in an L-shape with the portion thereof on the outer side of the vehicle body extending upward. Thus, a center portion of the rear end panel bulges rearward from the lower edge and both left and right edges thereof. Accordingly, the volume of the trunk can be increased to a maximum extent.

According to a fifth feature of the present invention, in addition to any one of the first to fourth features, there is provided the vehicle body rear part structure, wherein a recessed portion extending upward from the upper lateral edge line is formed in a rear surface of the rear end panel; and a lower end of a rear bumper is fixed to an attachment bracket fixed to the recessed portion.

According to the above configuration, the recessed portion extending upward from the upper lateral edge line is formed in the rear surface of the rear end panel; and the lower end of the rear bumper is fixed to the attachment bracket fixed to the recessed portion. Accordingly, the support stiffness of the attachment bracket is increased, thereby making it possible to increase the accuracy of the attachment position of the rear bumper.

According to a sixth feature of the present invention preferably but not necessarily, in addition to the first feature, there is provided the vehicle body rear part structure, wherein a rear pillar having a closed cross section and standing on the rear end of each of the rear frames is formed by joining a gutter panel having a flat plate shape to a gutter stiffener having a square U-shaped cross section; an under-opening frame as a lower edge of an opening portion at a rear part of the vehicle body is formed by joining an upper edge of the rear end panel having a flat plate shape to a rear end panel stiffener having a square U-shaped cross section; and the closed cross section of the rear pillar and a closed cross section of the under-opening frame are connected to each other at a connecting portion; the gutter stiffener includes an inner wall connecting the rear frame and the under-opening frame; and a bulk head constraining the closed cross section of the under-opening rear frame is joined to the inner wall at a portion thereof facing the connecting portion.

According to the above configuration, the rear pillar having a closed cross section and standing on the rear end of each of the rear frame is formed by joining the gutter panel having a flat plate shape to the gutter stiffener having a square U-shaped cross section; and the under-opening frame having a closed cross section and being the lower edge of the opening portion at the rear part of the vehicle body is formed by joining the upper edge of the rear end panel having a flat plate shape to the rear end panel stiffener having a square U-shaped cross section. The closed cross section of the rear pillar and the closed cross section of the under-opening frame are connected to each other at the connecting portion; the gutter stiffener includes the inner wall connecting the rear frame and the under-opening frame; and the bulk head constraining the closed cross section of the under-opening frame is joined to the inner wall at the portion thereof facing the connecting portion. Accordingly, a load from the rear frame can be transmitted to the under-opening frame through the inner wall of the gutter stiffener without increasing the size of the bulk head. Also, the bulk head can also increase the load transmission efficiency as it constrains the closed cross section of the rear pillar and the closed cross section of the under-opening frame.

According to a seventh feature of the present invention, in addition to the sixth feature, there is provided the vehicle body rear part structure, wherein the inner wall of the gutter stiffener is curved toward an inner side of the vehicle body from the rear frame to the under-opening frame.

According to the above configuration, the inner wall of the gutter stiffener is curved toward the inner side of the vehicle body from the rear frame to the under-opening frame. Accordingly, the load transmission from the rear frame to the under-opening frame can be made smoothly.

According to an eighth feature of the present invention, in addition to the sixth or seventh feature, there is provided the vehicle body rear part structure, wherein the rear end panel is bent at the longitudinal edge line extending in the up-down direction; and the bulk head is disposed in a vicinity of an extension line extending upward from the longitudinal edge line.

According to the above configuration, the rear end panel is bent at the longitudinal edge line extending in the up-down direction; and the bulk head is disposed in the vicinity of the extension line extending upward from the longitudinal edge line. Accordingly, the longitudinal edge line of the rear end panel having a high stiffness can be utilized as a load transmission passage to the bulk head.

According to a ninth feature of the present invention, in addition to any one of the sixth to eighth features, there is provided the vehicle body rear part structure, wherein a lower flange obtained by bending a lower end of the bulk head toward the inner side of the vehicle body is joined to an upper flange obtained by bending an upper end of the inner wall toward the inner side of the vehicle body.

According to the above configuration, the lower flange obtained by bending the lower end of the bulk head toward the inner side of the vehicle body is joined to the upper flange obtained by bending the upper end of the inner wall of the gutter stiffener toward the inner side of the vehicle body. Accordingly, the lower end of the bulk head is made closer to the inner wall of the gutter stiffener as much as possible, thereby making it possible to increase the load transmission efficiency.

According to a tenth feature of the present invention, in addition to any one of the sixth to ninth features, there is provided the vehicle body rear part structure, wherein the bulk head includes four flanges joined to four surfaces of the closed cross section of the rear pillar, respectively.

According to the above configuration, the bulk head includes the four flanges joined to the four surfaces of the closed cross section of the rear pillar, respectively. Accordingly, the bulk head is joined tightly to the rear pillar, thereby making it possible to increase the stiffness improving effect further.

According to an eleventh feature of the present invention, in addition to any one of the sixth to tenth features, there is provided the vehicle body rear part structure, wherein a bulging portion bulging rearward in conformity with a shape of a rear portion of the bulk head is formed at the upper edge of the rear end panel.

According to the above configuration, the bulging portion bulging rearward in conformity with the shape of the rear portion of the bulk head is formed at the upper edge of the rear end panel. Accordingly, cross-sectional area is increased for the under-opening frame formed to have a closed cross section by the upper edge of the rear end panel and the rear end panel stiffener, thereby making it possible to increase the stiffness.

According to a twelfth feature of the present invention preferably but not necessarily, in addition to the first feature, there is provided the vehicle body rear part structure, wherein a rear pillar standing along each of left and right side edges of a rear gate for opening and closing an opening portion of a trunk at a rear part of a/the vehicle body is formed by connecting a lower end of an upper rear pillar to an upper end of a lower rear pillar at a connecting potion, the lower rear pillar is formed to have a closed cross section by joining a gutter panel having a flat plate shape to a gutter stiffener including a front wall, an outer wall, and an inner wall and having a square U-shaped cross section, the upper rear pillar is formed to have a closed cross section by joining a rear pillar outer including a rear wall and an outer wall and having an L-shaped cross section to a rear pillar inner including a front wall and an inner wall and having an L-shaped cross section, and wherein preferably in a vicinity of the connecting portion, the outer wall of the gutter stiffener is cut, and a flange extending from the front wall of the rear pillar inner toward an outer side of the vehicle body is joined to a flange extending from the outer wall of the rear pillar outer toward the outer side of the vehicle body.

According to the above configuration, the rear pillar standing along each of the left and right side edges of the rear gate for opening and closing the opening portion of the trunk at the rear part of the vehicle body is formed by connecting the lower end of the upper rear pillar to the upper end of the lower rear pillar at the connecting potion. The lower rear pillar is formed to have a closed cross section by joining the gutter panel having a flat plate shape to the gutter stiffener including the front wall, the outer wall, and the inner wall and having a square U-shaped cross section. The upper rear pillar is formed to have a closed cross section by joining the rear pillar outer including the rear wall and the outer wall and having an L-shaped cross section to the rear pillar inner including the front wall and the inner wall and having an L-shaped cross section. In the vicinity of the connecting portion, the outer wall of the gutter stiffener is cut, and the flange extending from the front wall of the rear pillar inner toward the outer side of the vehicle body is joined to the flange extending from the outer wall of the rear pillar outer toward the outer side of the vehicle. Accordingly, the flange of the rear pillar inner and the flange of the rear pillar outer do not extend toward the front side of the vehicle body, thereby making it possible to prevent decrease in the volume of the trunk. In addition, while having a square U-shaped cross section below the connecting portion, the gutter stiffener has an L-shaped cross section in the vicinity of the connecting portion. Accordingly, when the rear pillar outer is brought closer from the outer side in the left-right direction and assembled to the rear pillar inner, the rear pillar outer is prevented from interfering with the gutter stiffener and obstructing the assembling.

According to a thirteenth feature of the present invention, in addition to the twelfth feature, there is provided the vehicle body rear part structure, wherein the outer wall of the gutter stiffener is cut obliquely such that a width thereof becomes smaller toward an upper side.

According to the above configuration, the outer wall of the gutter stiffener is cut obliquely such that a width thereof becomes smaller toward the upper side. Accordingly, it is possible to prevent an abrupt change in the strength of the gutter stiffener attributable to the cutting of the outer wall.

According to a fourteenth feature of the present invention, in addition to the twelfth or thirteenth feature, there is provided the vehicle body rear part structure, wherein a flange extending from the rear wall of the rear pillar outer toward a rear side of the vehicle body is joined to a flange extending from the inner wall of the rear pillar inner toward the rear side of the vehicle body.

According to the above configuration, the flange extending from the rear wall of the rear pillar outer toward the rear side of the vehicle body is joined to the flange extending from the inner wall of the rear pillar inner toward the rear side of the vehicle body. Accordingly, the rear pillar outer can be assembled to the rear pillar inner by simply bringing the rear pillar outer closer to the rear pillar inner from the outer side in the left-right direction, thereby improving the assemblability.

According to a fifteenth feature of the present invention, in addition to any one of the twelfth to fourteenth features, there is provided the vehicle body rear part structure, wherein a bulk head is provided inside the lower rear pillar in a vicinity of the connecting portion.

According to the above configuration, the bulk head is provided inside the lower rear pillar in the vicinity of the connecting portion. Accordingly, the stiffness of the rear pillar can be increased further by the bulk head.

According to a sixteenth feature of the present invention, in addition to any one of the twelfth to fifteenth features, there is provided the vehicle body rear part structure, wherein the gutter stiffener is joined to a rear end panel stiffener reinforcing a lower edge of the opening portion.

According to the above configuration, the gutter stiffener is joined to the rear end panel stiffener reinforcing the lower edge of the opening portion. Accordingly, the stiffness of the rear pillar can be increased further.

Here, a gutter lower panel 19 of an embodiment corresponds to the gutter panel of the present invention; an upper inner wall 20c of the embodiment corresponds to the inner wall of the present invention; a lower inner wall 20d of the embodiment corresponds to the inner wall of the present invention; a lower rear pillar 21 of the embodiment corresponds to the rear pillar of the present invention; first and second bulk heads 33 and 34 of the embodiment correspond to the bulk head of the present invention; and a front flange 33a, an upper flange 33b, a rear flange 33c, and a lower flange 33d of the embodiment correspond to the flange of the present invention.

The above and other objects, characteristics and advantages of the present invention will be clear from detailed descriptions of the preferred embodiment which will be provided below while referring to the attached drawings.

### BRIEF DESCRIPTION OF THE DRAWINGS

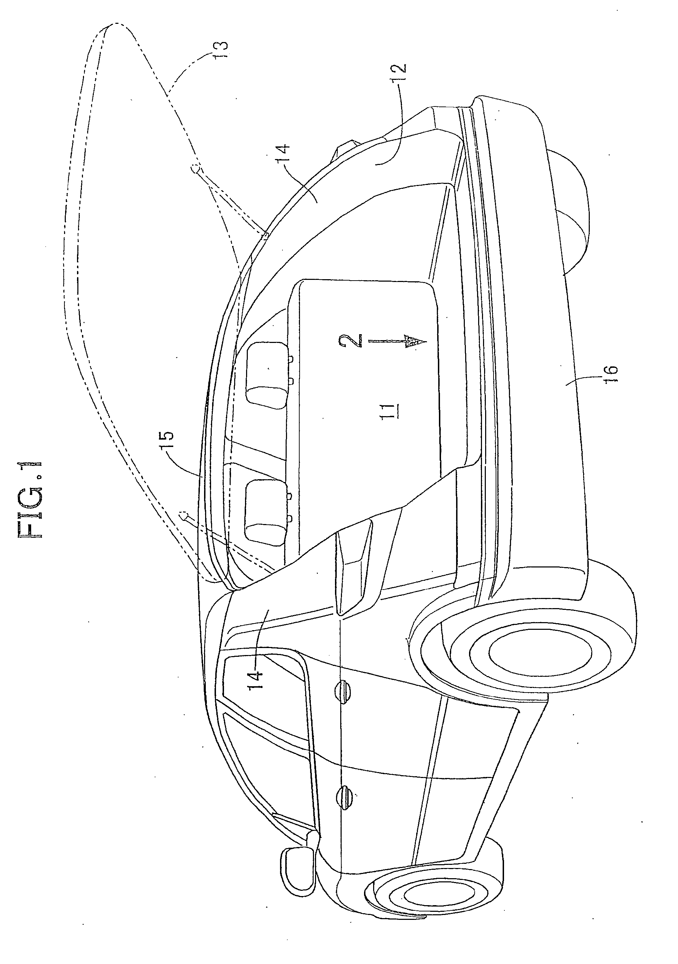

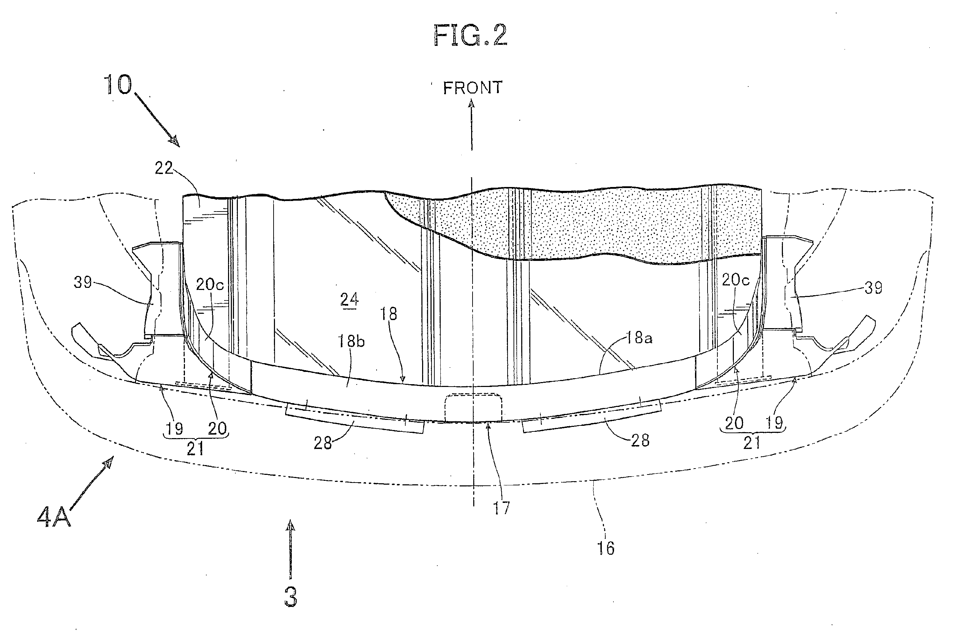

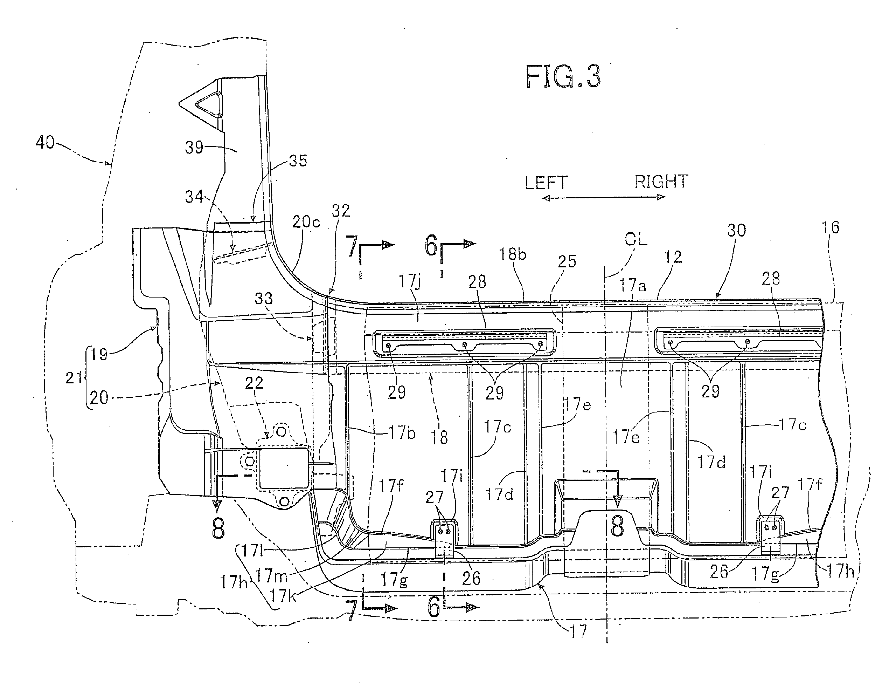

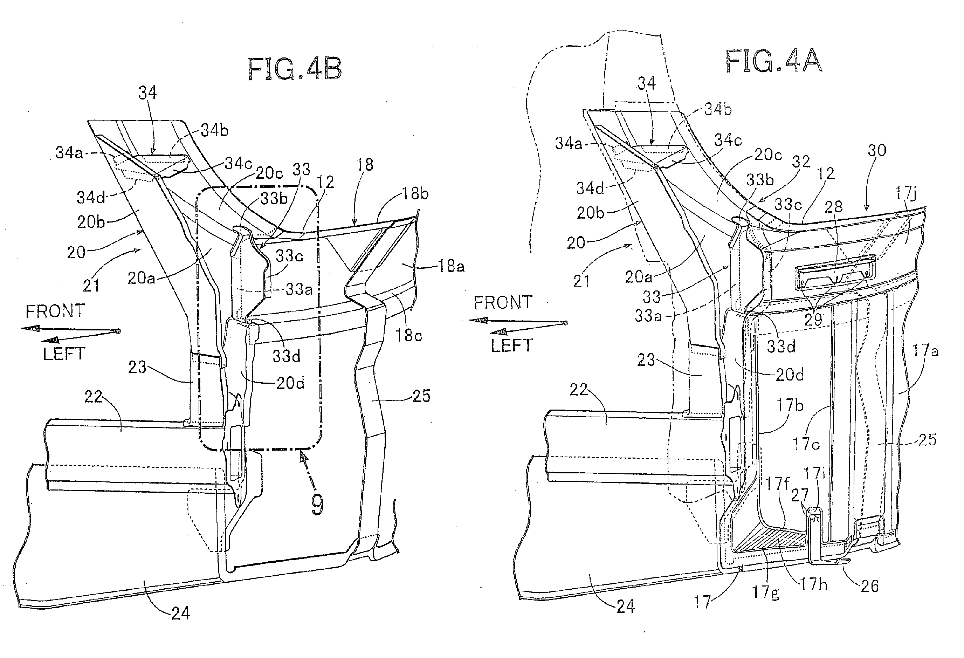

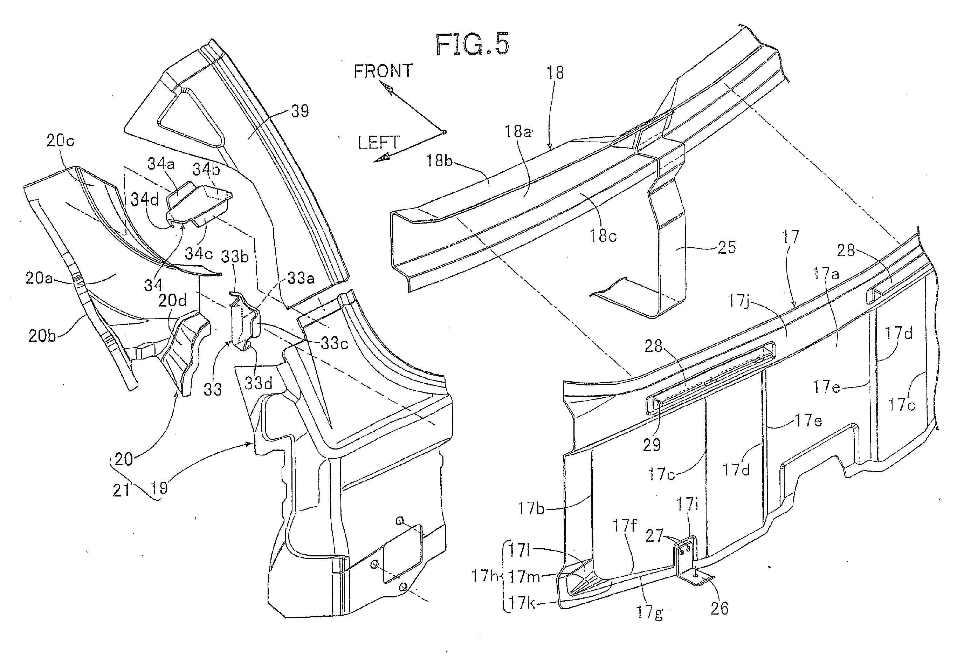

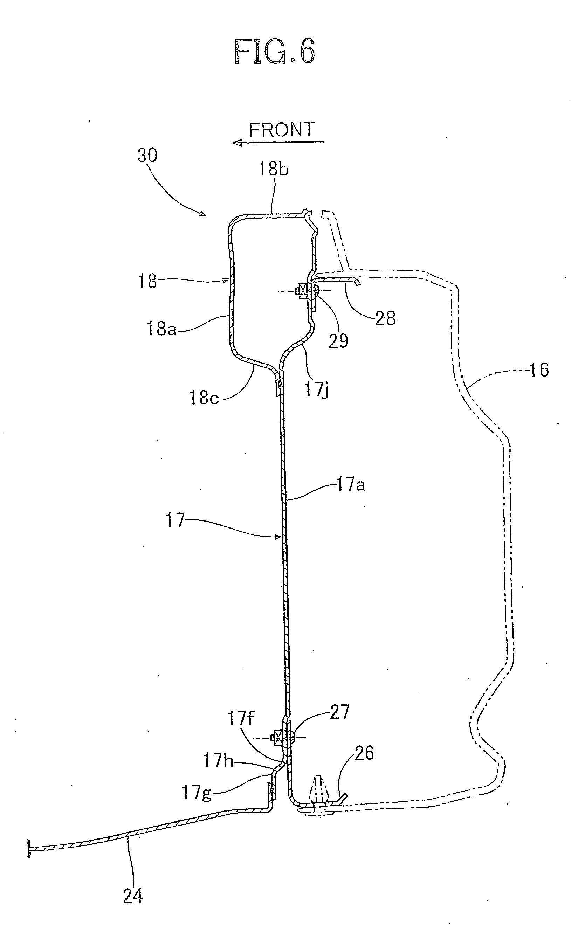

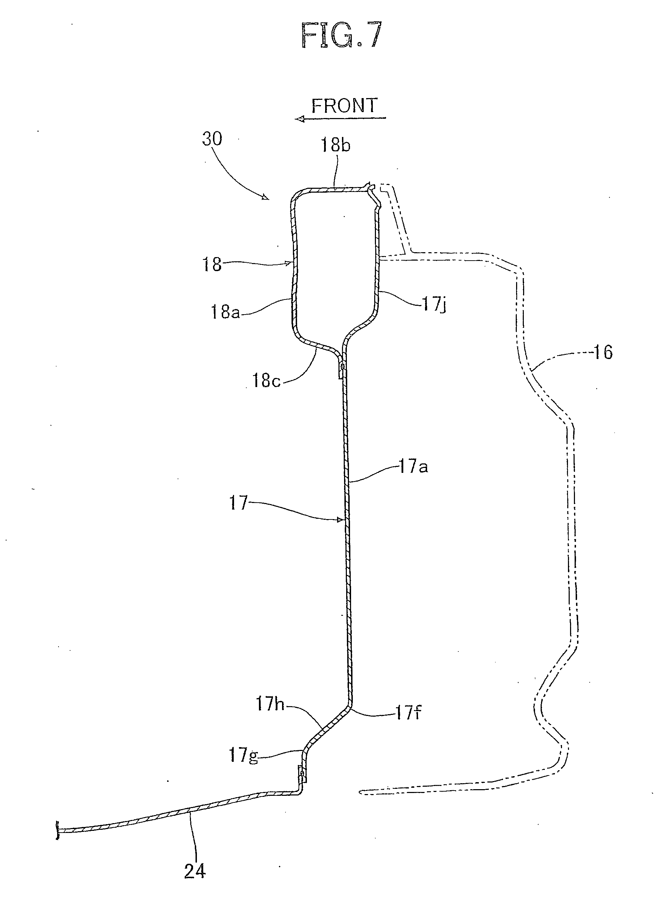

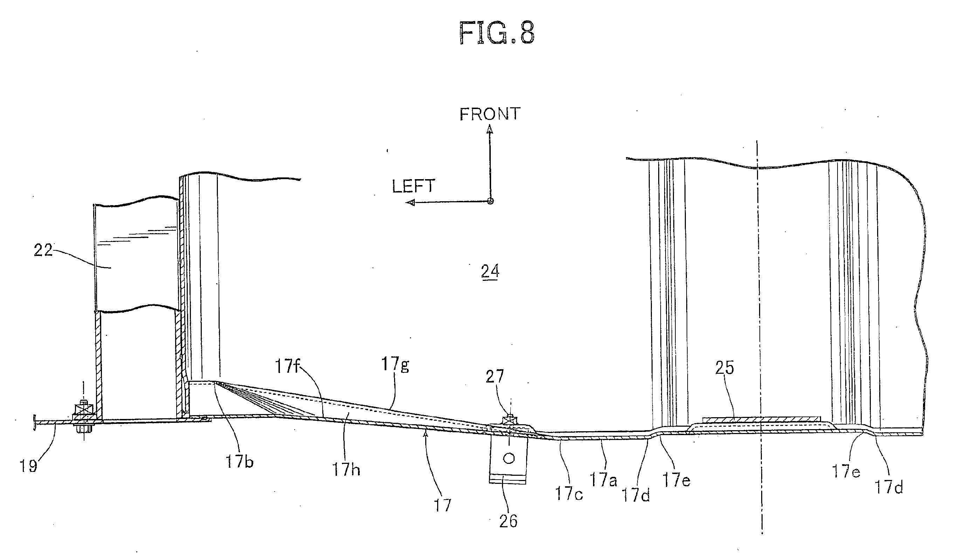

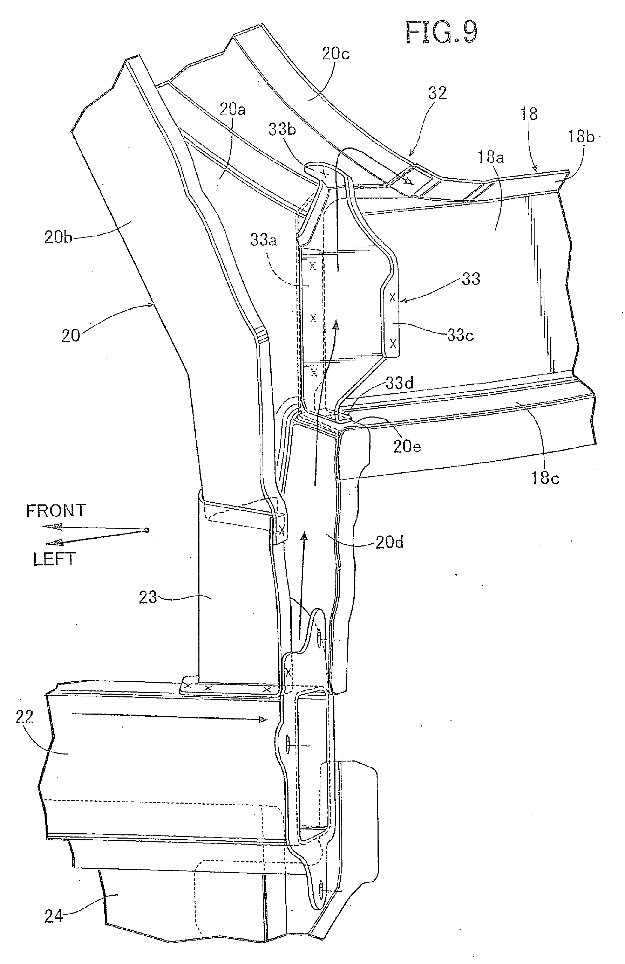

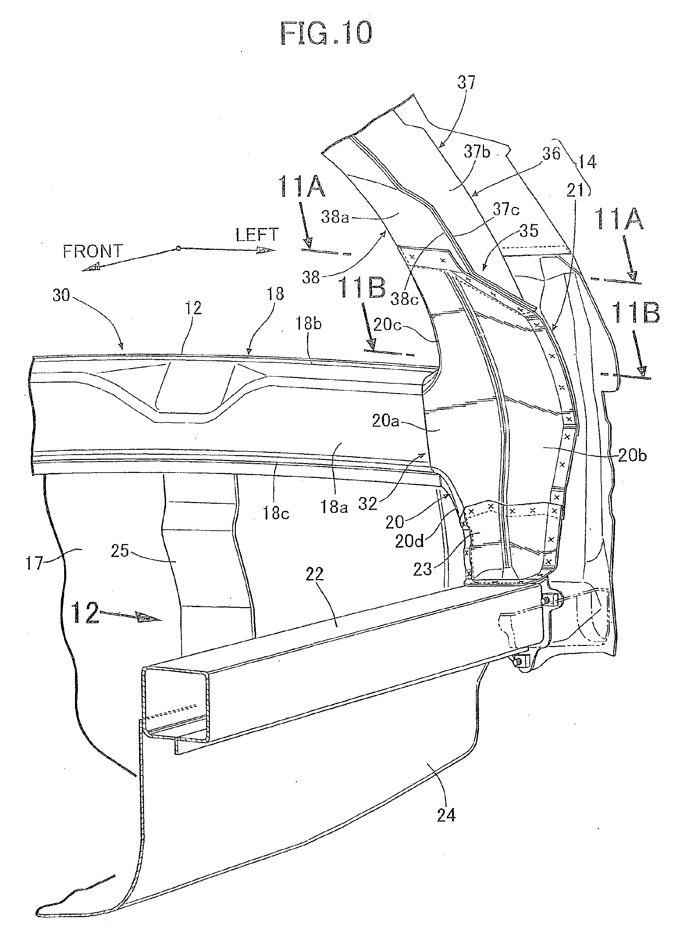

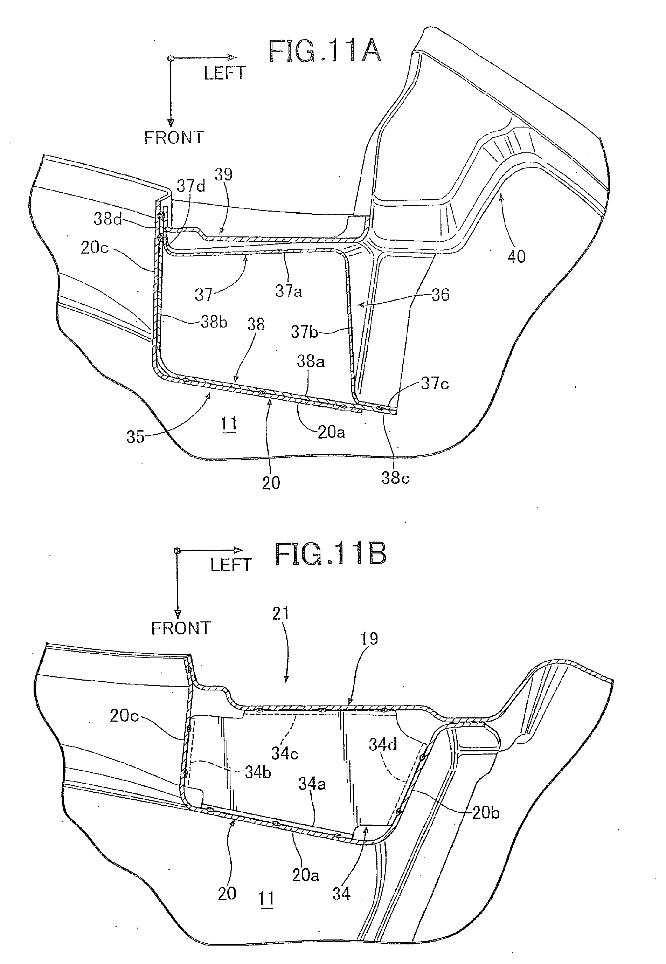

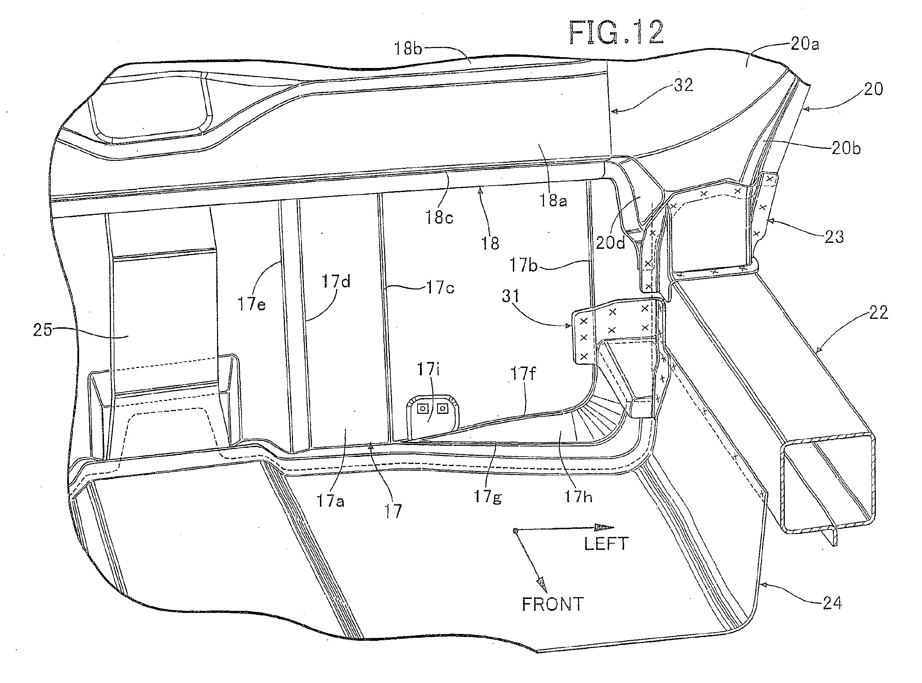

FIGS. 1 to 12 show an embodiment of the present invention: FIG. 1 is a view of a five-door vehicle seen from left rear; FIG. 2 is a view seen from a direction of an arrow 2 in FIG. 1; FIG. 3 is a view seen from a direction of an arrow 3 in FIG. 2; FIG. 4A is a view seen from a direction of an arrow 4A in FIG. 2; FIG. 4B is a view corresponding to FIG. 4A with a rear end panel being omitted; FIG. 5 is an exploded perspective view of FIG. 4A; FIG. 6 is a sectional view taken along a line 6-6 in FIG. 3; FIG. 7 is a sectional view taken along a line 7-7 in FIG. 3; FIG. 8 is a sectional view taken along a line 8-8 in FIG. 3; FIG. 9 is an enlarged view of a part indicated by an arrow 9 in FIG. 4B; FIG. 10 is a view seen from a direction of an arrow 10 in FIG. 2; FIG. 11A is a sectional view taken along a line 11A-11A in FIG. 10; FIG. 11B is a sectional view taken along a line 11B-11B in FIG. 10; and FIG. 12 is a view seen from a direction of an arrow 12 in FIG. 10.

### DESCRIPTION OF PREFERRED EMBODIMENT

An embodiment of the present invention will be described below based on FIGS. 1 to 12.

As shown in FIG. 1, a five-door vehicle includes, on its rear face, a rear gate 13 for opening and closing an opening portion 12 of a trunk 11 provided at a rear part of a vehicle body. The rear gate 13 is provided in such a manner as to be freely openable and closable in an up-down direction. The left and right edges of the opening portion 12 are defined by left and right rear pillars 14 and 14, respectively; the upper edge of the opening portion 12 is defined by the rear edge of a roof panel 15; and the lower edge of the opening portion 12 is defined by a rear bumper 16. The vehicle body structure of the five-door vehicle is symmetrical about a longitudinally extending center line of the vehicle body. Thus, the left-half structure will be described below as an illustrative structure.

As shown in FIGS. 2 to 5, a rear end panel 17 having a rectangular shape elongated in a left-right direction of the vehicle body is disposed at a portion located below the opening portion 12 and covered with the rear bumper 16. A rear end panel stiffener 18 including a front wall 18a, an upper wall 18b, and a lower wall 18c and having a square U-shaped cross section with the open side facing the rear side of the vehicle body is joined to the front surface of the upper edge of the rear end panel 17 to form an under-opening frame 30 having a closed cross section. A gutter lower panel 19 having a substantially flat plate shape is joined to the left end (an outer end in the left-right direction) of the rear end panel 17. A gutter stiffener 20 including a front wall 20a, an outer wall 20b, an upper inner wall 20c, and a lower inner wall 20d and having a square U-shaped cross section with the open side facing the rear side of the vehicle body is joined to the front surface of the gutter lower panel 19. When they are joined, the front wall 20a, the upper inner wall 20c, and the lower inner wall 20d of the gutter lower panel 19 are connected to the front wall 18a, the upper wall 18b, and the lower wall 18c of the rear end panel stiffener 18, respectively. The gutter lower panel 19 and the gutter stiffener 20 form a lower rear pillar 21 as a lower half of the rear pillar 14.

A rear frame 22 having a box-shaped cross section is disposed to extend in the front-rear direction along the left side of the vehicle body. The lower end of a rear frame gusset 23 having a square U-shaped cross section with the open side facing rearward is joined to the upper surface of a rear end portion of the rear frame 22. The lower end of the gutter stiffener 20 is joined to the upper end of the rear frame gusset 23. Moreover, the left end of the rear end panel 17 and the upcurved upper edge of a floor panel 24 forming the floor surface of the trunk 11 are joined to the right side surface of the rear frame 22. From the inside of the trunk 11, a rear frame end patch 31 is placed over the connecting portions of the rear end panel 17, the rear frame 22, and the floor panel 24 to reinforce the connecting portions (see FIG. 12). Moreover, a center portion, in the left-right direction, of the rear end panel stiffener 18 and the floor panel 24 are joined by a band-shaped stay 25 extending in the up-down direction along the front surface of the rear end panel 17.

As shown in FIGS. 3 to 7, a main portion 17a of the rear end panel 17 is a member of a generally flat plate shape, and a bulging portion 17j extending along the upper edge of the main portion 17a and bulging rearward forms the closed cross section together with the rear end panel stiffener 18. Each of the left and right halves of the rear end panel 17 includes four longitudinal edge lines 17b, 17c, 17d, and 17e extending in the up-down direction. Being bent in the front-rear direction at these longitudinal edge lines 17b, 17c, 17d, and 17e, the rear end panel 17 is arched gently as a whole in such a manner that its center portion in the left-right direction projects rearward. Accordingly, the surface stiffness can be increased.

There are two lateral edge lines 17f and 17g extending from the lower end of the longitudinal edge line 17c, which is the second longitudinal edge line from the outer side in the left-right direction, toward the outer side in the left-right direction in such a manner as to widen a gap therebetween. A tip end side (an outer side in the left-right direction) of each of the lateral edge lines 17f and 17g is curved upward. In a preferred embodiment both lateral edge lines 17f and 17g start from the lower end of the longitudinal edge line 17c. It is also preferred that the lateral edge line 17f at the end of its curved upward section merges with the longitudinal edge line 17b before it turns into a horizontally extending end section (see FIG. 3). The upper lateral edge line 17f is located rearward of the lower lateral edge line 17g, preferably such that the curved upward portion of the lateral edge line 17f is located rearwardly and inwardly. An L-shaped inclined surface 17h is formed between the two lateral edge lines 17f and 17g. In particular the two legs of the L-shape of the inclined surface 17h are constituted by substantially plane first and second portions 17k and 171 connected by a curved portion 17m. The portion 17k extends from the lower end of the longitudinal line 17c in the left-right direction. While the rear end panel 17 is disposed vertically as a whole, the first portion 17k of the inclined surface 17h is inclined such that its front side and rear side are oriented obliquely upward and obliquely downward, respectively preferably inclined upwardly and rearwardly relative to a horizontal plane. The second portion 171 is extending in an upward direction at an outer side of the vehicle and is inclined such that its front side is oriented obliquely inward preferably inclined inwardly and rearwardly relative to a vertical plane extending in the longitudinal direction of the vehicle.

There is a recessed portion 17i sinking in frontward and extending upward at a position slightly outward of the longitudinal edge line 17c of the rear end panel 17, which is the second longitudinal edge line from the outer side in the left-right direction, i.e., in the vicinity of the inner end, in the left-right direction, of the inclined surface 17h. An L-shaped attachment bracket 26 is fixed to this recessed portion 17i with bolts 27 and 27. Moreover, an attachment bracket 28 having an L-shaped cross section is fixed to the rear surface of the bulging portion 17j of the rear end panel 17 with bolts 29 ···. Furthermore, the rear bumper 16 is fixed to the lower attachment bracket 26 and the upper attachment bracket 28.

As can be seen clearly from FIGS. 3 to 5 and 9, a first bulk head 33 is disposed inside the gutter lower panel 19 and the gutter stiffener 20 forming a closed cross section, at such a position as to face a connecting portion 32 at which the lower rear pillar 21 obtained by joining the gutter lower panel 19 and the gutter stiffener 20 is connected to the under-opening frame 30 obtained by joining the rear end panel 17 and the end panel stiffener 18. The first bulk head 33 includes a front flange 33a oriented inward in the left-right direction, an upper flange 33b oriented outward in the left-right direction, a rear flange 33c oriented outward in the left-right direction, and a lower flange 33d oriented inward in the left-right direction. The front flange 33a is joined to the front wall 20a of the gutter stiffener 20. The upper flange 33b is joined to the upper inner wall 20c of the gutter stiffener 20. The rear flange 33c is joined to the gutter lower panel 19. The lower flange 33d is joined to the lower inner wall 20d of the gutter stiffener 20.

As shown in FIGS. 4A, 4B, 5, and 11B, a second bulk head 34 is disposed on an upper portion of the lower rear pillar 21 formed to have a closed cross section by joining the gutter lower panel 19 and the gutter stiffener 20. The second bulk head 34 includes a front flange 34a oriented upward, an inner flange 34b oriented downward, a rear flange 34c oriented downward, and an outer flange 34d oriented downward. The front flange 34a is joined to the front wall 20a of the gutter stiffener 20. The inner flange 34b is joined to the upper inner wall 20c of the gutter stiffener 20. The rear flange 34c is joined to the gutter lower panel 19. The outer flange 34d is joined to the outer wall 20b of the gutter stiffener 20.

As shown in FIG. 10, the rear pillar 14 includes an upper rear pillar 36 connected to an upper portion the lower rear pillar 21 through a connecting portion 35. As shown in FIG. 11B, the lower rear pillar 21 is formed to have a closed cross section by joining the gutter stiffener 20 having a square U-shaped cross section to a front portion of the gutter lower panel 19 having a flat plate shape. As shown in FIG. 11A, the upper rear pillar 36 is formed to have a closed cross section by joining a rear pillar outer 37 including a rear wall 37a and an outer wall 37b and formed in an L-shape in cross section to a rear pillar inner 38 including a front wall 38a and an inner wall 38b and formed in an L-shape in cross section. The rear wall 37a of the rear pillar outer 37 is covered with a gutter mid panel 39 (see FIGS. 3, 5, and 11A) connected to the upper end of the gutter lower panel 19. The outer wall 37b of the rear pillar outer 37 is covered with a side panel assembly 40 (see FIGS. 3 and 11A).

Moreover, an upper portion of the gutter stiffener 20 includes the front wall 20a, the outer wall 20b, and the upper inner wall 20c and is formed basically in a square U-shape in cross section (see FIG. 11B). However, in the vicinity of the connecting portion 35 at the upper end, the outer wall 20b is cut in such a manner that as to become narrower toward the upper side; therefore, at the position of the connecting portion 35, the gutter stiffener 20 is formed in an L-shape in cross section by the front wall 20a and the upper inner wall 20c (see FIG. 11A). Further, the rear pillar inner 38 is laid on and joined to inner sides of the front wall 20a and the upper inner wall 20c of the gutter stiffener 20 (see FIG. 11A). In this state, the front wall 38a of the rear pillar inner 38 projects outward in the left-right direction from the front wall 20a of the gutter stiffener 20 to form a flange 38c. A flange 37c formed by bending the outer wall 37b of the rear pillar outer 37 outward in the left-right direction is laid on and joined to the rear surface of the flange 38c. In addition, a flange 37d formed by bending rearward the inner end, in the left-right direction, of the rear wall 37a of the rear pillar outer 37 is laid on and joined to a flange 38d at the rear end of the inner wall 38b of the rear pillar inner 38.

Next, description will be given of operations of the embodiment of the present invention having the above-described configuration.

In a case where rear ends of the left and right rear frames 22 and 22 undergo deflection due to the automobile driving over a stepped object on a road surface or turning at high speed, bending loads are applied to the rear end panel 17 connected at its left and right end portions to the rear frames 22 and 22. Since the rear end panel 17 is bent in the front-rear direction at the multiple longitudinal edge lines 17b, 17c, 17d, and 17e for the purpose of increasing the surface stiffness thereof, there is a possibility that when the bending loads are applied, the lower ends of the longitudinal edge lines 17b, 17c, 17d, and 17e may act as points where bending starts, deteriorating the stiffness. However, in the embodiment, the rear end panel 17 includes the inclined surface 17h formed between the two lateral edge lines 17f and 17g extending in the left-right direction in such a manner as to connect lower portions of the two longitudinal edge lines 17b and 17c. Moreover, the inclined surface 17h is inclined from the vertical direction in the front-rear direction. Thus, the inclined surface 17h can prevent the stiffness deterioration attributable to the lower portions of the longitudinal edge lines 17b and 17c acting as points where bending starts. This makes it possible to improve the stiffness of the rear end panel 17 without using reinforcement members such as patches.

Moreover, of the upper and lower lateral edge lines 17f and 17g defining the inclined surface 17h, the upper lateral edge line 17f is located rearward of the lower lateral edge line 17g. Also, the inclined surface 17h is formed in an L-shape with a portion thereof on the outer side of the vehicle body extending upward. Thus, a center portion of the rear end panel 17 bulges rearward farther than a lower portion and left and right end portions thereof. Accordingly, the volume of the trunk 11 can be increased to a maximum extent.

In addition, the rear end panel 17 is reinforced by joining the rear end panel stiffener 18 along the upper edge thereof. This reinforcement, together with the inclined surface 17h reinforcing the lower portion of the rear end panel 17, can increase the stiffness of the whole rear end panel 17. Further, the recessed portion 17i extending upward from the upper lateral edge line 17f is formed in the rear surface of the rear end panel 17, and the rear bumper 16 is fixed at its lower end to the attachment bracket 26 fixed to this recessed portion 17i. Accordingly, the support stiffness of the attachment bracket 26 on the rear end panel 17 is increased, thereby making it possible to increase the accuracy of the attachment position of the rear bumper 16.

Moreover, in the vicinity of the connecting portion 32 at which the closed cross section of the lower rear pillar 21 and the closed cross section of the under-opening frame 30 are connected, the gutter stiffener 20 includes the lower inner wall 20d connecting the rear frame 22 and the under-opening frame 30. The first bulk head 33 constraining the closed cross section of the under-opening frame 30 is joined to the lower inner wall 20d at the portion thereof facing the connecting portion 32. Accordingly, as shown in arrow lines in FIG. 9, a load from the rear frame 22 can be transmitted to the under-opening frame 30 through the lower inner wall 20d of the gutter stiffener 20 without increasing the size of the first bulk head 33. In this event, the first bulk head 33 can also increase the load transmission efficiency as it constrains both the closed cross section of the lower rear pillar 21 and the closed cross section of the under-opening frame 30.

Moreover, the lower inner wall 20d of the gutter stiffener 20 is curved gently toward the inner side of the vehicle body from the rear frame 22 to the under-opening frame 30 (see FIG. 5). Accordingly, the load transmission from the rear frame 22 to the under-opening frame 30 can be achieved smoothly as compared to a case where the lower inner wall 20d is bent at a right angle.

Moreover, the first bulk head 33 is joined, at the front flange 33a, the upper flange 33b, the rear flange 33c, and the lower flange 33d, to the four surfaces of the closed cross section of the lower rear pillar 21, respectively. Accordingly, the first bulk head 33 is joined tightly to the lower rear pillar 21, making it possible to increase the stiffness improving effect further. In the above state, the lower flange 33d obtained by bending the lower end of the first bulk head 33 toward the inner side of the vehicle body is joined to the upper flange 20e obtained by bending the upper end of the lower inner wall 20d of the gutter stiffener 20 toward the inner side of the vehicle body (see FIG. 9). Accordingly, the lower end of the first bulk head 33 is made closer to the lower inner wall 20d of the gutter stiffener 20, making it possible to increase the load transmission efficiency.

Moreover, the surface stiffness of the rear end panel 17 is increased by the longitudinal edge line 17b, and the first bulk head 33 is disposed in the vicinity of an extension line extending upward from the longitudinal edge line 17b (see FIG. 3). Accordingly, the longitudinal edge line 17b of the rear end panel 17 can be utilized as a load transmission passage to the first bulk head 33. Further, the bulging portion 17j (see FIG. 5) bulging rearward in conformity with the shape of a rear portion of the first bulk head 33 is formed at the upper edge of the rear end panel 17. Accordingly, cross-sectional area is increased for the under-opening frame 30 formed to have a closed cross section by the upper edge of the rear end panel 17 and the rear end panel stiffener 18, thereby making it possible to increase the stiffness.

As shown in FIG. 11A, the upper rear pillar 36 is formed to have a closed cross section by joining the rear pillar outer 37 including the rear wall 37a and the outer wall 37b and having an L-shaped cross section to the rear pillar inner 38 including the front wall 38a and the inner wall 38b and having an L-shaped cross section. The flange 38c extending from the front wall 38a of the rear pillar inner 38 toward the outer side of the vehicle body is joined to the flange 37c extending from the outer wall 37b of the rear pillar outer 37 toward the outer side of the vehicle body. Accordingly, both flanges 38c and 37c extend toward the outer side of the vehicle body instead of extending toward the front side of the vehicle body, thereby making it possible to prevent themselves from reducing the volume of the trunk 11 in front thereof.

The gutter stiffener 20 of the lower rear pillar 21 includes the front wall 20a, the outer wall 20b, and the upper inner wall 20c and is formed basically in a square U-shape in cross section; however, in the vicinity of the connecting portion 35 to the upper rear pillar 36, the outer wall 20b is cut obliquely, and thus the gutter stiffener 20 is in an L-shape in cross section (see FIGS. 10, 11A, and 11B). Accordingly, when the rear pillar outer 37 is brought closer to the rear pillar inner 38 from the outer side in the left-right direction to be assembled thereto, the rear pillar outer 37 can be prevented from interfering with the outer wall 20b of the gutter stiffener 20 and obstructing the assembling. In addition, the outer wall 20b of the gutter stiffener 20 is cut obliquely such that the width thereof becomes smaller toward the upper side. Accordingly, it is possible to prevent an abrupt change in the strength of the gutter stiffener 20 attributable to the cutting of the outer wall 20b.

Moreover, as shown in FIG. 11A, the flange 37d extending toward the rear side of the vehicle body from the rear wall 37a of the rear pillar outer 37 is joined to the flange 38d extending toward the rear side of the vehicle body from the inner wall 38b of the rear pillar inner 38. Accordingly, the rear pillar outer 37 can be assembled to the rear pillar inner 38 by simply bringing the rear pillar outer 37 closer to the rear pillar inner 38 from the outer side in the left-right direction, thereby improving the assemblability.

Moreover, the second bulk head 34 is provided inside the lower rear pillar 21 in the vicinity of the connecting portion 35 of the lower pillar 21 and the upper pillar 36. Accordingly, the stiffness of the rear pillar 14 can be increased further by the bulk head 34. Furthermore, the gutter lower panel 19 is joined to the rear end panel stiffener 18 reinforcing the lower edge of the opening portion 12. Accordingly, the stiffness of the rear pillar 14 can be increased further.

An embodiment of the present invention is explained above, but the present invention may be modified in a variety of ways as long as the modifications do not depart from the gist of the present invention.

For example, in the embodiment, each of the left and right halves of the rear end panel 17 includes four longitudinal edge lines 17b, 17c, 17d, and 17e, but the number of longitudinal edge lines of each of the left and right halves may be two or more.

Further, the shape of the first bulk head 33 is not limited to that in the embodiment, but may be modified appropriately.

In addition, in the embodiment, the flange 37d of the rear wall 37a of the rear pillar outer 37 and the flange 38d of the inner wall 38b of the rear pillar inner 38 extend toward the rear of the vehicle body, but they may extend toward the inner side of the vehicle body.

A rear end panel (17) is bent in a front-rear direction by being bent at a plurality of longitudinal edge lines (17b to 17e) extending in an up-down direction, so that the surface stiffness of the rear end panel (17) is increased. The rear end panel (17) includes inclined surfaces (17h) each defined between two lateral edge lines (17f, 17g) extending in a left-right direction, one of said two lateral lines (17b, 17e) connect lower portions of two longitudinal edge lines (17b, 17c), and the inclined surfaces (17h) are inclined from a vertical direction in the front-rear direction. Thus, when bending loads are applied to the rear end panel (17) in response to deflection of left and right rear frames (22), the inclined surfaces (17) can prevent deterioration in the stiffness of the rear end panel (17) attributable to the lower portions of the longitudinal edge lines (17b, 17c) acting as points where bending starts. This makes it possible to improve the stiffness of the rear end panel (17) without using reinforcement members such as patches.

## Claims

1. A vehicle body rear part structure, wherein
a rear pillar (14) standing along each of left and right side edges of a rear gate (13) for opening and closing an opening portion (12) of a trunk (11) at a rear part of a vehicle body is formed by connecting a lower end of an upper rear pillar (36) to an upper end of a lower rear pillar (21) at a connecting potion (35),
the lower rear pillar (21) is formed to have a closed cross section by joining a gutter panel (19) having a flat plate shape to a gutter stiffener (20) including a front wall (20a), an outer wall (20b), and an inner wall (20c) and having a square U-shaped cross section,
the upper rear pillar (36) is formed to have a closed cross section by joining a rear pillar outer (37) including a rear wall (37a) and an outer wall (37b) and having an L-shaped cross section to a rear pillar inner (38) including a front wall (38a) and an inner wall (38b) and having an L-shaped cross section, **characterised in that**
in a vicinity of the connecting portion (35), the outer wall (20b) of the gutter stiffener (20) is cut, and a flange (38c) extending from the front wall (38a) of the rear pillar inner (38) toward an outer side of the vehicle body is joined to a flange (37c) extending from the outer wall (37a) of the rear pillar outer (37) toward the outer side of the vehicle body.

2. The vehicle body rear part structure according to claim 1, wherein the outer wall (20b) of the gutter stiffener (20) is cut obliquely such that a width thereof becomes smaller toward an upper side.

3. The vehicle body rear part structure according to claim 1 or 2, wherein a flange (37d) extending from the rear wall (37a) of the rear pillar outer (37) toward a rear side of the vehicle body is joined to a flange (38d) extending from the inner wall (38b) of the rear pillar inner (38) toward the rear side of the vehicle body.

4. The vehicle body rear part structure according to any one of claims 1 to 3, wherein a bulk head (34) is provided inside the lower rear pillar (21) in a vicinity of the connecting portion (35).

5. The vehicle body rear part structure according to any one of claims 1 to 4, wherein the gutter stiffener (20) is joined to a rear end panel stiffener (18) reinforcing a lower edge of the opening portion (12).

## Patentansprüche

1. Fahrzeugkarosserieheckteilstruktur, worin
eine Hecksäule (14), die entlang jedem von linken und rechten Seitenrändern einer Hecktür (13) zum Öffnen und Schließen des Öffnungsabschnitts (12) eines Gepäckraums (11) am Heckteil einer Fahrzeugkarosserie steht, durch Verbinden eines unteren Endes einer oberen Hecksäule (36) mit einem oberen Ende einer unteren Hecksäule (21) an einem Verbindungsabschnitt (35) gebildet ist,
die untere Hecksäule (21) mit geschlossenem Querschnitt ausgebildet ist, durch Verbinden eines Ablaufblechs (19), das eine flache Plattenform hat, mit einer Ablaufversteifung (20), die eine vordere Wand (20a), eine äußere Wand (20b) und eine innere Wand (20c) enthält und einen rechteckigen U-förmigen Querschnitt aufweist,
die obere Hecksäule (36) mit geschlossenem Querschnitt ausgebildet ist, durch Verbinden eines Hecksäulenaußenelements (37), das eine hintere Wand (37a) und eine äußere Wand (37b) enthält und einen L-förmigen Querschnitt aufweist, mit einem Hecksäuleninnenelement (38), das eine vordere Wand (38a) und eine innere Wand (38b) enthält und einen L-förmigen Querschnitt aufweist,
**dadurch gekennzeichnet, dass** in der Nähe des Verbindungsabschnitts (35) die äußere Wand (20b) der Ablaufversteifung (20) geschnitten ist, und ein Flansch (38c), der sich von der vorderen Wand (38a) des Hecksäuleninnenelements (38) zur Außenseite der Fahrzeugkarosserie erstreckt, mit einem Flansch (37c) verbunden ist, der sich von der äußeren Wand (37a) des Hecksäulenaußenelements (37) zur Außenseite der Fahrzeugkarosserie hin erstreckt.

2. Die Fahrzeugkarosserieheckteilstruktur nach Anspruch 1, worin die äußere Wand (20b) der Ablaufversteifung (20) schräg geschnitten ist, so dass deren Breite zur oberen Seite hin kleiner wird.

3. Die Fahrzeugkarosserieheckteilstruktur nach Anspruch 1 oder 2, worin ein Flansch (37d), der sich von der hinteren Wand (37a) des Hecksäulenaußenelements (37) zur Rückseite der Fahrzeugkarosserie erstreckt, mit einem Flansch (38d) verbunden ist, der sich von der inneren Wand (38b) des Hecksäuleninnenelements (38) zur Rückseite der Fahrzeugkarosserie hin erstreckt.

4. Die Fahrzeugkarosserieheckteilstruktur nach einem der Ansprüche 1 bis 3, worin eine Trennwand (34) innerhalb der unteren Hecksäule (21) in der Nähe des Verbindungsabschnitts (35) vorgesehen ist.

5. Die Fahrzeugkarosserieheckteilstruktur nach einem der Ansprüche 1 bis 4, worin die Ablaufversteifung (20) mit einer hinteren Endblechversteifung (18) verbunden ist, die einen unteren Rand des Öffnungsabschnitts (12) verstärkt.

## Revendications

1. Structure de carrosserie arrière de véhicule, dans laquelle:
un pilier arrière (14) qui se dresse le long de chacun des bords latéraux gauche et droit d'une porte arrière (13) pour ouvrir et fermer une partie d'ouverture (12) d'un coffre (11) à une partie arrière d'une carrosserie de véhicule est formé en connectant une extrémité inférieure d'un pilier arrière supérieur (36) à une extrémité supérieure d'un pilier arrière inférieur (21) à une partie de connexion (35);
le pilier arrière inférieur (21) est formé de manière à présenter une section transversale fermée en joignant un panneau de gouttière (19) présentant une forme de plaque plate à un raidisseur de gouttière (20) comprenant une paroi avant (20a), une paroi extérieure (20b) et une paroi intérieure (20c), et présentant une section transversale carrée en forme de U;
le pilier arrière supérieur (36) est formé de manière à présenter une section transversale fermée en joignant un extérieur de pilier arrière (37) comprenant une paroi arrière (37a) et une paroi extérieure (37b) et présentant une section transversale en forme de L à un intérieur de pilier arrière (38) comprenant une paroi avant (38a) et une paroi intérieure (38b) et présentant une section transversale en forme de L,
**caractérisée en ce que**
dans le voisinage de la partie de connexion (35), la paroi extérieure (20b) du raidisseur de gouttière (20) est coupée, et une bride (38c) qui s'étend à partir de la paroi avant (38a) de l'intérieur de pilier arrière (38) en direction d'un côté extérieur de la carrosserie de véhicule est jointe à une bride (37c) qui s'étend à partir de la paroi extérieure (37a) de l'extérieur de pilier arrière (37) en direction du côté extérieur de la carrosserie de véhicule.

2. Structure de carrosserie arrière de véhicule selon la revendication 1, dans laquelle la paroi extérieure (20b) du raidisseur de gouttière (20) est coupée en oblique, de telle sorte qu'une largeur de celle-ci devienne plus petite en direction d'un côté supérieur.

3. Structure de carrosserie arrière de véhicule selon la revendication 1 ou 2, dans laquelle une bride (37d) qui s'étend à partir de la paroi arrière (37a) de l'extérieur de pilier arrière (37) en direction d'un côté arrière de la carrosserie de véhicule est jointe à une bride (38d) qui s'étend à partir de la paroi intérieure (38b) de l'intérieur de pilier arrière (38) en direction du côté arrière de la carrosserie de véhicule.

4. Structure de carrosserie arrière de véhicule selon l'une quelconque des revendications 1 à 3, dans laquelle une cloison (34) est prévue à l'intérieur du pilier arrière inférieur (21) dans le voisinage de la partie de connexion (35).

5. Structure de carrosserie arrière de véhicule selon l'une quelconque des revendications 1 à 4, dans laquelle le raidisseur de gouttière (20) est joint à un raidisseur de panneau d'extrémité arrière (18), renforçant un bord inférieur de la partie d'ouverture (12).
